# EUROPEAN PATENT APPLICATION

(11) **EP 4 190 881 A1**
(43) Date of publication of application: **07.06.2023**
(21) Application number: 21890953.9
(22) Date of filing: 26.10.2021
(51) Int. Cl.: C10G 47/20, C10G 67/02, C10G 45/64, C10G 45/12, B01J 29/80, B01J 29/74

(54) **HETEROGENEOUS DEWAXING CATALYST AND PREPARATION METHOD THEREFOR AND METHOD FOR PRODUCING LUBRICANT BASE OIL**

(30) Priority: 12.11.2020 CN 202011258641
(71) Applicant: PetroChina Company Limited, Dongcheng District Beijing 100007 (CN)
(72) Inventor: YANG, Xiaodong, Beijing 100724 (CN); SUN, Famin, Beijing 100724 (CN); LU, Xuefeng, Beijing 100724 (CN); ZHANG, Guojia, Beijing 100724 (CN); NI, Shurong, Beijing 100724 (CN); WANG, Xinmiao, Beijing 100724 (CN); GAO, Shanbin, Beijing 100724 (CN); LIU, Yanfeng, Beijing 100724 (CN); MENG, Xiangbin, Beijing 100724 (CN); JIN, Lili, Beijing 100724 (CN); JIANG, Lili, Beijing 100724 (CN); DONG, Chunming, Beijing 100724 (CN); ZHANG, Wencheng, Beijing 100724 (CN); GUO, Jintao, Beijing 100724 (CN); MA, Donghai, Beijing 100724 (CN); SUN, Shengbo, Beijing 100724 (CN); HAN, Zhibo, Beijing 100724 (CN)
(74) Representative: Slingsby Partners LLP
(86) International application number: PCT/CN2021/126250
(87) International publication number: WO 2022/100426

(57) **Abstract**

The present invention provides a heterogeneous dewaxing catalyst and a preparation method therefor and a method for producing lubricant base oil. The preparation method for the heterogeneous dewaxing catalyst comprises: performing alkali metal salt solution and/or acid solution modification on an unformed molecular sieve comprising a 10-membered ring structure to obtain a molecular sieve modified for the first time; after being subjected to forming treatment, performing secondary modification by using the alkali metal salt solution and/or acid solution, and then loading a precious metal active component on the modified molecular sieve to obtain the heterogeneous dewaxing catalyst. The method for producing the lubricant base oil comprises: performing isomerization and cracking reactions on a mixture of wax-bearing oil and hydrogen with at least two types of heterogeneous dewaxing catalysts in sequence; mixing reaction products with hydrogen and then performing an aromatic saturation reaction on the mixture and a supplementary refined catalyst, and performing fractionation on the reaction products to obtain the lubricant base oil. The lubricant base oil obtained by using the heterogeneous dewaxing catalyst and the method for producing the lubricant base oil achieves a great decrease of turbidity points.

## Description

### Technology Field

The present invention belongs to the field of lubricant base oil, and relates to the production of II/III/III⁺ lubricant base oil by using VGO (Vacuum gas oil), VGDO (Vaccum gas dewaxed oil), hydrocracking tail oil, deasphalted oil, coker wax oil and ceratum as raw materials. In particular, the present invention relates to an isodewaxing catalyst, its preparation method and a process for producing a lubricant base oil.

### Background

The lubricating oil is conventionally produced by traditional three-step process of solvent refining - solvent dewaxing - clay refining. The base oil produced by this process generally has less than 90% of saturated hydrocarbon content, with higher sulfur and nitrogen content, and darker appearance. At the same time, this process is more dependent on the quality of raw materials used to produce base oil. It is difficult to produce a base oil having high viscosity index from intermediate crude, thus only Class I base oil is usually produced, and Class II and III base oils having high viscosity index and low pour point cannot be produced by this process, let alone lubricant base oils with low turbidity point.

With the development of industry, especially the development of automotive industry, higher demands are made on the quality of base oil. On one hand, it is desired to produce base oil with high viscosity index from intermediate crude, and on the other hand, it is desired to obtain base oils having extremely high or ultra-high viscosity index by isomerization of wax oils having high condensation point, which drives the development of catalytic dewaxing technology and isodewaxing technology.

Catalytic dewaxing technology was first proposed by Mobil in the 1970s, which mainly uses the selective function of catalyst to selectively crack linear n-alkanes and hydrocarbons with long side chains into small molecules of hydrocarbons, so that the wax molecules are removed by selective cracking on the catalyst to achieve the purpose of reducing the pour point of base oil, which does not have obvious effects for turbidity point. However, the selective cracking of wax molecules in this process will lead to the decrease in yield and viscosity index of the base oil, which has a viscosity index generally lower than that insolvent dewaxing.

Isodewaxing technology was proposed by Chevron in the 1990s. Under a hydro-cracking condition, n-alkanes is isomerized by means of isomerization function of the catalyst on n-alkanes. Thus, the base oil has a yield and viscosity index that are higher than that in catalytic dewaxing. Isodewaxing technology is considered to be the most promising technology for production of Class I and II base oils. The core of isodewaxing technology for lubricant base oil is the need for highly selective isodewaxing catalysts, which usually carry out isomerization and hydrocracking reactions, dominated by isomerization, continuously on a bifunctional catalyst.

Although the base oil produced by isodewaxing technology has the advantages of low sulfur and nitrogen content, transparent color, high viscosity index and low pour point, some complex wax molecules cannot be completely transformed, which makes the base oil often accompanied by flocculent matter precipitated from the base oil after standing for a period of time at room temperature or lower temperature, especially for the heavy base oil with high viscosity, which has a low pour point, but a high turbidity point generally above 5°C, or even 10-20°C.The flocculent matter not only affects the appearance of base oil, but also has certain influence on other properties.

Currently, researchers have explored different methods to reduce the turbidity point of base oils from various aspects.

US6468417 and US6468418 describe the use of acidic clay or alumina as adsorbent to treat base oil in a specific vessel. It reduces the turbidity point of the base oil in a limited extent, due to the competitive adsorption of wax molecules. After the adsorbent bed works for a period of time to saturation, the adsorbed wax has to be recovered by heating method before the adsorption is carried out again. It is complicated to operate, especially when treating heavy base oils. Due to their high viscosity, it is very difficult for the base oil to pass through the adsorbent bed, even if solvent dilution is used.

US4950382 describes a process of firstly using solvent dewaxing or catalytic dewaxing to reduce the pour point of base oil, and then using a non-polar, non-acidic molecular sieve with a pore size of 5-7Å for adsorption dewaxing, followed by adding additives to increase the viscosity index and reduce the pour point. It also has limited effect on reducing the turbidity point of base oil.

US7674363 describes a process of using the isodewaxing and solvent dewaxing in sequence to treat Fischer-Tropsch synthetic oil. Although this process is more effective in reducing the pour point of base oil, the wax is still contained in an amount of more than 30% after treatment at -20°C in the base oil. Thus, it cannot effectively reduce the turbidity point of base oil.

US8449760 describes a process to improve the properties of base oil by oil blending, comprising mixing the Fischer-Tropsch synthetic oil with high pour point and low boiling point into the distillate oil with high boiling point to prepare the base oil with turbidity point not higher than 0°C. However, the ortho wax molecules cannot actually be converted into isomeric molecules in practical sense by such physical blending means, and therefore it is not possible to effectively reduce the turbidity point.

CN101223262A describes a process of separating the molecules that cause high turbidity point from the base oil with a kinematic viscosity greater than 10 cst at 100°C, comprising separating wax molecules with a high turbidity point from base oil with a high turbidity point by cooling its surface, so that the turbidity point of base oil is reduced. The wax molecules absorbed on the cooled surface are separated by a melting process, and then the cooled surface can be used again. This process can prepare base oil with turbidity point no more than 15°C, but it is disadvantageous for its necessity to add supporting devices for industrial devices, the complicated implementation, and more importantly, the incapability to effectively reduce the turbidity point of base oil.

### Summary of the invention

The Object of the present invention is to provide an isodewaxing catalyst and a process for the production of lubricant base oil shaving a low turbidity point from wax-containing oils having a high condensation point, in which the use of the catalyst and the process for the production of lubricant base oils from wax-containing oils having a high condensation point effectively solves the problem in terms of high turbidity point in the existing production process of lubricant base oils.

To achieve the above object, the present invention provides a process for preparing an isodewaxing catalyst, comprising:
(1) primarily modifying an unformed molecular sieve containing a ten-membered ring structure by using a modifier, and drying and baking it to obtain a primarily modified molecular sieve, wherein the modifier used in the primary modification includes a solution of an alkali metal salt and/or an acid solution;
(2) secondarily modifying the formed primarily modified molecular sieve by using a modifier, and then drying and baking it to obtain a secondarily modified molecular sieve, wherein the modifier used in the secondary modification includes a solution of an alkali metal salt and/or an acid solution;
(3) loading a precious metal as an active component onto the secondarily modified molecular sieve, drying and baking it to obtain the isodewaxing catalyst.

In the above preparation process, preferably, the unformed molecular sieve containing a ten-membered ring structure has a structure having through pores.

In the above preparation process, preferably, the unformed molecular sieve containing the ten-membered ring structure comprises one or more of ZSM-5, SAPO-11, EU-1, ITQ-13, ZSM-22, MCM-22, NU-87, ZSM-23, ZSM-35, ZSM-48, and their composite molecular sieves.

In the above preparation process, preferably, in step (1), the concentration of the alkali metal salt in the solution is 0.1-0.5 mol/L and the concentration of the acid in the acid solution is 0.1-0.5 mol/L. More preferably, the ratio of the unformed molecular sieve containing the ten-membered ring structure to the volume of the modifier used in the primary modification is 100 g:50-70 mL.

In the above preparation process, preferably, in step (2), the concentration of the alkali metal salt in the solution is 0.1-0.5 mol/L and the concentration of the acid in the acid solution is 0.1-0.5 mol/L. More preferably, the ratio of the primarily modified molecular sieve to the volume of the modifier used in the secondary modification is 1 g:2mL.

In the above preparation process, preferably, the precious metal as an active component comprises one or more of Pt, Pd, Ru, Rh, Re and Ir; more preferably, the precious metal as an active component comprises Pt and Pd; further preferably, in the isodewaxing catalyst, the Pt and Pd are included in an amount of 0.1-1wt% and 0.1-1wt%, respectively.

In the above preparation process, preferably, in the isodewaxing catalyst, the single precious metal as an active component accounts for 0.1-0.5% by mass of the catalyst.

In the above preparation process, preferably, in step (1), the alkali metal salt comprises a salts of Group IA, IIA, IIIA, IB and/or IIB metal; preferably, the alkali metal salt comprises one or more of a potassium salt, magnesium salt, calcium salt, strontium salt, barium salt, copper salt, zinc salt, gallium salt, and tin salt.

In the above preparation process, preferably, in step (1), the acid comprises one or more of nitric acid, phosphoric acid, acetic acid, tartaric acid and citric acid.

In the above preparation process, preferably, in step (2), the alkali metal salt comprises a salt of Group IA, IIA, IIIA, IB and/or IIB metal; preferably, the alkali metal salt comprises one or more of potassium salt, magnesium salt, calcium salt, strontium salt, barium salt, copper salt, zinc salt, gallium salt, and tin salt.

In the above preparation process, preferably, in step (2), the acid comprises one or more of nitric acid, phosphoric acid, acetic acid, tartaric acid, and citric acid.

In the above preparation process, preferably, in step (1), the baking is carried out at a temperature of 300-600°C for a time period of 4-10 hours.

In the above preparation process, preferably, in step (2), the baking is carried out at a temperature of 300-600°C for a time period of 5-20 hours.

In the above preparation process, preferably, the formation is carried out by kneading the primarily modified molecular sieve with alumina, extruding and drying it to complete the formation of the primarily modified molecular sieve. In the preferred embodiment, the formation is carried out by kneading the primarily modified molecular sieve with alumina powders, extruding and drying it to complete the formation of the primarily modified molecular sieve, wherein the mass ratio of the primarily modified molecular sieve to alumina powder is 1:5-5:1.

In the above preparation process, preferably, loading the precious metal as an active component onto the secondarily modified molecular sieve in step (3) is carried out by loading a precursor solution of the precious metal as an active component onto the secondarily modified molecular sieve using an equivalent-volume impregnation method, drying and baking it to obtain the isodewaxing catalyst, wherein the baking is carried out at a temperature of300-600°C for a time period of5 -20 hours.

In the above preparation process, preferably, the primarily modified molecular sieve has a B acid content of 0.2-0.6 mmol/g and a content ratio of B acid to L acid of6:1-1:1 when it is tested at 150°C; a B acid content of 0.05-0.4 mmol/g and a content ratio of B acid to L acid of 6:1-1: 1when it is tested at 350°C; wherein the sum of B acid and L acid content at 150°C is larger than the sum of B acid and L acid content at 350°C; and wherein the acid type and acid content is determined preferably by a pyridine-infrared (Py-IR) method.

The present invention also provides an isodewaxing catalyst obtained by the above-mentioned process for preparing the isodewaxing catalyst.

The present invention also provides a process for producing a lubricant base oil, comprising:
(A). premixing a wax-containing oil with hydrogen to form a hydrogen-oil mixture, and reacting the hydrogen-oil mixture with at least two of the above-mentioned isodewaxing catalysts in sequence to perform isomerization and cracking reactions of the wax-containing oil, so as to produce an oil (M), wherein the at least two isodewaxing catalysts are selected from the above-mentioned isodewaxing catalysts; and
(B). mixing the oil (M) with hydrogen and then subjecting it to an aromatic hydrocarbon saturation reaction with a finishing catalyst to produce a product, which is fractionated to obtain the lubricant base oil;
wherein the wax-containing oil has a freezing point not higher than 70°C, a wax content not higher than 80wt%, an aromatic hydrocarbon content not higher than 50wt%, a sulfur content not higher than 100µg/g, a nitrogen content not higher than 50µg/g, and a distillation range of 300-600°C.

In the above process for producing a lubricant base oil, the wax-containing oil is preferably a wax-containing oil having a high freezing point, which can be used to prepare a base oil with a high viscosity and a high viscosity index.

In the above process for producing a lubricant base oil, preferably, the active component in the finishing catalyst is a precious metal catalyst; more preferably, the active component in the finishing catalyst contains at least one element of Pt, Pd, Ru, Rh, Re and Ir, and accounts for 0.1-1.0 wt% of the mass of the finishing catalyst; and the finishing catalyst has a support prepared from one or more of alumina, amorphous silica-alumina, titanium dioxide, zirconium dioxide and silicon dioxide.

In the above process for producing a lubricant base oil, preferably, the wax-containing oil is one or more selected from VGO, VGDO, hydrocracking tail oil, deasphalted oil, and coker wax oil.

In the above process for producing a lubricant base oil, preferably, the isomerization and cracking reaction in step (A)is carried out at a temperature of 300-400°C and a pressure of 8-16 MPa.

In the above process for producing a lubricant base oil, preferably, the aromatic hydrocarbon saturation reaction in step (B) is carried out at a temperature of 150-300°C and a pressure of 8-16 MPa.

In the above process for producing a lubricant base oil, preferably, the wax-containing oil has a freezing point not higher than 60°C, a wax content not higher than 70wt%, an aromatic hydrocarbon content not higher than 50wt%, a sulfur content not higher than 100µg/g, a nitrogen content not higher than 50µg/g, and a final distillation point not higher than 600°C.

More preferably, the wax-containing oil has a freezing point not higher than 50°C, a wax content not higher than 60wt%, an aromatic hydrocarbon content not higher than 40wt%, a sulfur content not higher than 50µg/g, a nitrogen content not higher than 20µg/g, and a final distillation point not higher than 580°C.

In a preferred embodiment, the above process for producing a lubricant base oil comprises:
(A). premixing a wax-containing oil with hydrogen to form a hydrogen-oil mixture, and feeding the hydrogen-oil mixture into an isodewaxing reactor, and reacting it with isodewaxing catalysts to perform isomerization and cracking reactions, so as to produce an oil (M), wherein the isodewaxing reactor includes at least two beds and is charged with at least two isodewaxing catalysts selected from the above-mentioned isodewaxing catalysts in the present invention; and
(B). mixing the oil (M) with hydrogen and then subjecting it to an aromatic hydrocarbon saturation reaction with an finishing catalyst to produce a product, which is fractionated to obtain the lubricant base oil;
wherein the wax-containing oil has a freezing point not higher than 70°C, a wax content not higher than 80wt%, an aromatic hydrocarbon content not higher than 50wt%, a sulfur content not higher than 100µg/g, a nitrogen content not higher than 50µg/g, and a distillation range of 300-600°C.

The present invention also provides a lubricant base oil obtained by the above process for producing a lubricant base oil, wherein the lubricant base oil has a turbidity point not higher than -5°C.

In the above lubricant base oil, preferably, the turbidity point of the lubricant base oil is not higher than -8°C; more preferably, the turbidity point of the lubricant base oil is not higher than -15°C.

The present invention also provides an apparatus for producing a lubricant base oil, comprising an isodewaxing reactor, an finishing reactor and a fractionation system, wherein
the isodewaxing reactor is connected to the finishing reactor, which is connected to the fractionation system,
the isodewaxing reactor comprises at least two beds, and is charged with at least two isodewaxing catalysts; the isodewaxing reactor is used to perform isomerization and cracking reactions of a wax-containing oil, mixed with hydrogen, with the isodewaxing catalysts therein; and the at least two isodewaxing catalysts are selected from the above-mentioned isodewaxing catalysts in the present invention;
the finishing reactor is used to perform an aromatic hydrocarbon saturation reaction of the reaction products in the isodewaxing reactor, mixed with hydrogen; and
the fractionation system is used to perform fractionation of the product obtained in the finishing reactor to obtain a lubricant base oil.

The technical solution provided by the present invention achieves a significant improvement in the conversion capacity of macromolecules in lubricant base oils, which can effectively isomerize wax molecules and reduce the turbidity point of base oils. Compared with the prior art, the technical solution of the present invention has the following advantages:
(1) The isodewaxing catalyst provided by the present invention has excellent performance and is particularly suitable for the production of lubricant base oil; when the wax-containing oil is treated with the isodewaxing catalyst provided by the present invention to produce lubricant base oil by the hydrogenation and isomerization method, the base oil has a high yield and excellent performance.
(2) The process for producing lubricant base oil provided by the present invention realizes the preparation of lubricant base oil having a low turbidity point. The lubricant base oil as prepared has a greatly reduced turbidity point of not higher than -5°C, even if it is produced from a wax-containing oil having a high condensation point as raw material (in the preferred embodiment, by using different types of catalysts and adjusting the sequence of the catalysts, the turbidity point can be not higher than -8°C (as shown in Example 18) or even -15°C (as shown in Example 16)),while the resulting lubricant base oil has additional advantages of low pour point and low aromatic hydrocarbon content.
(3) The process for producing a lubricant base oil provided by the present invention can be applied to the production of lubricant base oil from wax-containing oil having a high condensation point. It shows excellent processing ability in the production of a lubricant base oil from wax-containing oil having a high condensation point, and it has the advantages of strong aromatic hydrocarbon saturation ability, excellent hydro-isomerization performance, high base oil yield, lowered pour point of base oil and improved turbidity point. Especially it realizes the production of a lubricant base oil with high viscosity and viscosity index and low turbidity point.
(4) The process for producing a lubricant base oil provided by the present invention can be applied to the treatment of VGO, VGDO, hydrocracking tail oil, deasphalted oil, coked wax oil, etc, especially for producing a high-grade lubricant base oil having a low turbidity point from a heavy wax-containing oil having a high condensation point, and thus it has broad application prospects.

### Detailed Description of Preferred Embodiments

In order to have a clearer understanding of the technical features, objectives and beneficial effects of the present invention, the following detailed description of the technical solutions of the present invention is provided, which, however, should not to be construed as limiting the scope of the practicable scope of the present invention.

### Example 1

The commercially available molecular sieve powders for industrial applications ZSM-5, SAPO-11, EU-1, ITQ-13, ZSM-22, MCM-22, NU-87, ZSM-23, ZSM-35, ZSM-48 were modified with solutions of alkali metal salts at a concentration of 0.1-0.5 mol/L and/or acid solutions at a concentration of 0.1-0.5 mol/L, respectively (specifically, impregnating the original powder of molecular sieve with the solution of alkali metal salt and/or acidic solution), wherein the ratio of the mass of the original powder of molecular sieve to the volume of the modified solution was100g: 50-70mL, and the modified molecular sieve is then dried and baked at 550°C for 4-10 hours to obtain a primarily modified molecular sieve; wherein 100g of each of the above molecular sieves were weighed, having a Si/Al₂O₃ molar ratio of 0.5-120, an average grain size of 50-100 nm. The modified products and modifying agents are shown in Table 1.

**Table 1**

| Entries (primarily modified molecular sieve) | Raw molecular sieve powder | | | Modifying agents | |
|---|---|---|---|---|---|
| | Type | Si/Al₂O₃molar ratio | Average grain size (nm) | Type | Amount, ml |
| A1 | ZSM-5 | 84 | 54 | 0.5 mol/L KCl | 55 |
| B1 | SAPO-11 | 0.6 | 91 | 0.1mol/LCaCl₂ | 65 |
| C1 | EU-1 | 42 | 62 | 0.2mol/L SnCl₂ | 57 |
| D1 | ITQ-13 | 118 | 74 | 0.5mol/Lcitric acid | 58 |
| E1 | ZSM-22 | 61 | 98 | 0.3mol/Lacetic acid | 51 |
| F1 | MCM-22 | 67 | 52 | 0.1mol/L nitric acid | 58 |
| G1 | NU-87 | 45 | 107 | 0.3mol/LBa(NO₃)₂ | 65 |
| H1 | ZSM-23 | 87 | 68 | 0.2mol/Ltartaric acid | 70 |
| I1 | ZSM-35 | 31 | 78 | 0.3mol/L BaCl₂ | 54 |
| J1 | ZSM-48 | 93 | 88 | 0.4mol/Lcitric acid | 53 |

Each of the primarily modified molecular sieves are characterized by Pyridine infrared (Py-IR) adsorption-desorption as follows: each of primarily modified molecular sieve was placed in a pyridine cuvette, pretreated by evacuation, and subjected to adsorption to saturation in a pyridine cuvette at 0°C in an ice bath, followed by characterization by pyridine desorption at 150°C and 350°C.The amounts of B- and L-acids were calculated, and the results are shown in Table 2.

**Table 2**

| Entries (primarily modified molecular sieve) | Temperature | Analysis results | |
|---|---|---|---|
| | | B-acid (mmol/g) | L-acid (mmol/g) |
| A1 | 150°C | 0.598 | 0.114 |
| | 350°C | 0.378 | 0.080 |
| B1 | 150°C | 0.102 | 0.024 |
| | 350°C | 0.051 | 0.017 |
| C1 | 150°C | 0.352 | 0.059 |
| | 350°C | 0.158 | 0.027 |
| D1 | 150°C | 0.233 | 0.157 |
| | 350°C | 0.190 | 0.046 |
| E1 | 150°C | 0.556 | 0.122 |
| | 350°C | 0.398 | 0.067 |
| F1 | 150°C | 0.185 | 0.183 |
| | 350°C | 0.151 | 0.150 |
| G1 | 150°C | 0.424 | 0.198 |
| | 350°C | 0.106 | 0.103 |
| H1 | 150°C | 0.249 | 0.125 |
| | 350°C | 0.251 | 0.090 |
| I1 | 150°C | 0.534 | 0.097 |
| | 350°C | 0.222 | 0.041 |
| J1 | 150°C | 0.300 | 0.075 |
| | 350°C | 0.213 | 0.042 |

### Example 2

This Example provides an isodewaxing catalyst (A1), which is prepared as follows:
(1) 70g of the primarily modified molecular sieve (A1) prepared in Example 1 was mixed with 40g of alumina powder, and extruded to obtain a wet strip, which was dried at 200°C for 5 hours and then impregnated with 200ml of 0.1mol/L KCl solution to perform the secondary modification, followed by drying at 100°C and baking at 550°C for 5 hours to prepare the secondarily modified molecular sieve, i.e. catalyst carrier.
(2) A solution containing PtCl₂ and PdCl₂ was loaded onto the catalyst carrier (i.e., the secondarily modified molecular sieve) by the equivalent-volume impregnation method, and then it was dried at 120°C and baked at 550°C for 4 hours to obtain catalyst (A1), wherein the Pt and Pd contents in catalyst (A1) were 0.3 wt% and 0.2 wt% (in terms of catalyst mass), respectively.

### Example 3

This example provides an isodewaxing catalyst (A2), which was prepared by a process same as that of Example 2, except that 100 g of the primarily modified molecular sieve (A1) prepared in Example 1 was mixed and kneaded with 20 g of alumina powder, and the two baking processes were carried out at a temperature of 450°C for a time of 10 hours, to obtain a catalyst (A2) having Pt and Pd contents of 1.0 wt% and 0.1 wt% (in terms of catalyst mass), respectively.

### Example 4

This example provides an isodewaxing catalyst (A3), which was prepared by a process same as that of Example 2, except that 50 g of the primarily modified molecular sieve (A1) prepared in Example 1 was mixed and kneaded with 60 g of alumina powder, and the two baking processes were carried out at a temperature of 600°C, to obtain a catalyst (A3) having Pt and Pd contents of 0.5 wt% and 0.1 wt% (in terms of catalyst mass), respectively.

### Example 5

This example provides an isodewaxing catalyst (A4), which was prepared by a process same as that of Example 2, except that 20 g of the primarily modified molecular sieve (A1) prepared in Example 1was mixed and kneaded with 100 g of alumina powder, and the two baking processes were carried out at a temperature of 300°C for a time of 20 hours, to obtain a catalyst (A3) having Pt and Pd contents of 0.1 wt% and 1.0 wt% (in terms of catalyst mass), respectively.

### Example 6

This example provides an isodewaxing catalyst (B), which was prepared by a process same as that of Example 2, except that the primarily modified molecular sieve (B1) prepared in Example 1 was used instead of (A1), and the secondary modification was performed by impregnation with 0.2 mol/L CaCl₂ solution instead of 0.1 mol/L KCl solution.

### Example 7

This example provides an isodewaxing catalyst (C), which was prepared by a process same as that of Example 2, except that the primarily modified molecular sieve (C1) prepared in Example 1 was used instead of (A1), and the secondary modification was performed by impregnation with 0.3 mol/L SnCl₂ solution instead of 0.1 mol/L KCl solution.

### Example 8

This example provides an isodewaxing catalyst (D), which was prepared by a process same as that of Example 2, except that the primarily modified molecular sieve (D1) prepared in Example 1 was used instead of (A1), and the secondary modification was performed by impregnation with a 200 ml mixed solution of Ga(NO₃)₃ and citric acid (where the concentration of Ga(NO₃)₃ was 0.1 mol/L and the concentration of citric acid was 0.5 mol/L based on the volume of the mixed solution) instead of 0.1 mol/L KCl solution.

### Example 9

This example provides an isodewaxing catalyst (E), which was prepared by a process same as that of Example 2, except that the primarily modified molecular sieve (E1) prepared in Example 1 was used instead of A1, and the secondary modification was performed by impregnation with a 200 ml mixed solution of ZnCl₂ and acetic acid (where the concentration of ZnCl₂ was 0.5 mol/L and the concentration of acetic acid was 0.2 mol/L based on the volume of the mixture) instead of 0.1 mol/L KCl solution.

### Example 10

This example provides an isodewaxing catalyst (F), which was prepared by a process same as that of Example 2, except that the primarily modified molecular sieve (F1) prepared in Example 1 was used instead of (A1), and the secondary modification was performed by impregnation with 200 ml of mixed solution of Ba(NO₃)₂ and nitric acid (where the concentration of Ba(NO₃)₂ was 0.3 mol/L and the concentration of nitric acid was 0.1 mol/L based on the volume of the mixed solution) instead of 0.1 mol/L KCl solution.

### Example 11

This example provides an isodewaxing catalyst (G), which was prepared by a process same as that of Example 2, except that the primarily modified molecular sieve (G1) prepared in Example 1 was used instead of (A1), and the secondary modification was performed by impregnation with 200 ml of mixed solution of Ba(NO₃)₂ and nitric acid (where the concentration of Ba(NO₃)₂ was 0.3 mol/L and the concentration of nitric acid was 0.1 mol/L based on the volume of the mixed solution) instead of 0.1 mol/L KCl solution.

### Example 12

This example provides an isodewaxing catalyst (H), which was prepared by a process same as that of Example 2, except that the primarily modified molecular sieve (H1) prepared in Example 1 was used instead of (A1), and the secondary modification was performed by impregnation with a 200 ml mixed solution of CuCl₂ and phosphoric acid (where the concentration of CuCl₂ was 0.5 mol/L and the concentration of phosphoric acid was 0.2 mol/L based on the volume of the mixed solution) instead of 0.1 mol/L KCl solution.

### Example 13

This example provides an isodewaxing catalyst (I), which was prepared by a process same as that of Example 2, except that the primarily modified molecular sieve (I1) prepared in Example 1 was used instead of (A1), and the secondary modification was performed by impregnation with 200 ml of mixed solution of MgCl₂ solution and tartaric acid solution (where the concentration of MgCl₂ was 0.2 mol/L and the concentration of tartaric acid was 0.3 mol/L based on the volume of the mixed solution) instead of 0.1 mol/L KCl solution.

### Example 14

This example provides an isodewaxing catalyst (J), which was prepared by a process same as that of Example 2, except that the primarily modified molecular sieve (J1) prepared in Example 1 was used instead of (A1), and the secondary modification was performed by impregnation with 200 ml of mixed solution of BaCl₂ and citric acid (where the concentration of BaCl₂ was 0.3 mol/L and the concentration of citric acid was 0.4 mol/L based on the volume of the mixture) instead of 0.1 mol/L KCl solution.

### Comparative Example 1

This comparative Example provides an isodewaxing catalyst (FC1), the preparation method of which differs from Example 10 only in that MCM-22 in Example 1 was used directly instead of the primarily modified molecular sieve (F 1), and the secondary impregnation modification step was not performed, otherwise the same as in Example 2.

### Comparative Example 2

This comparative Example provides an isodewaxing catalyst (FC2), the preparation method of which differs from Example 10 only in that the secondary impregnation modification step was not performed, otherwise the same as in Example 7.

### Comparative Example 3

This comparative Example provides an isodewaxing catalyst (IC1), which was prepared by a process same as that of Example 13, except that ZSM-35 in Example 1 was used directly instead of the primarily modified molecular sieve (I1), and the secondary impregnation modification step was not performed.

### Comparative Example 4

This comparative Example provides an isodewaxing catalyst (IC2),which was prepared by a process same as that of Example 13, except that the secondary impregnation modification step was not performed.

### Example 15

This Example provides an apparatus for producing a lubricant base oil, comprising: a fixed-bed hydrogenation reactor and a fractionation system, wherein the fixed-bed hydrogenation reactor comprises an isodewaxing reactor (i.e. a hydroisomerization reactor) and a finishing reactor connected to the isodewaxing reactor, both reactors connected by a pipeline and having the same reaction pressure; and the fractionation system is connected to the finishing reactor.

The bed of the isodewaxing reactor was divided into two beds, i.e. an upper bed and a lower bed, having a filling volume ratio of 1:1, and a total volume of 100 ml. The upper bed was filled with the catalyst (B) provided in the above examples, and the lower bed was filled with the catalyst (A) provided in the above examples. The isodewaxing reactor was used to perform the isomerization reaction and cracking reaction of the wax-containing oil, mixed with hydrogen, and the isodewaxing catalyst therein.

The finishing reactor was used to perform the aromatic hydrocarbon saturation reaction after mixing the products generated from the reaction in the isodewaxing reactor with hydrogen, and was filled with finishing catalyst PHF-301 from Petrochina.

The fractionation system was used to fractionate the product obtained from the finishing reactor to obtain the lubricant base oil.

### Example 16

This Example provides an apparatus for producing a lubricant base oil, which differs from the apparatus of Example 15 only in that the upper bed of the isodewaxing reactor was filled with the catalyst (E) provided in the above Example instead of the catalyst (B), and the lower bed of the isodewaxing reactor was filled with the catalyst (H) provided in the above Example instead of the catalyst (A), otherwise the same as in Example 17.

### Example 17

This Example provides an apparatus for producing a lubricant base oil. The apparatus differs from the apparatus of Example 15 only in that the beds of the isodewaxing reactor were divided into three beds, i.e.an upper bed, a middle bed and a lower bed instead of the two beds, having a volume ratio of 3:3:4 (the upper bed : middle bed : lower bed), and the upper bed of the isodewaxing reactor was filled with the catalyst (C) provided in the above Example instead of the catalyst (B), the middle bed of the isodewaxing reactor was filled with the catalyst (D) provided in the above Example, and the lower bed of the isodewaxing reactor was filled with the catalyst (G) provided in the above Example instead of the catalyst (A), otherwise the same as in Example 17.

### Example 18

This Example provides an apparatus for producing a lubricant base oil, which differs from the apparatus of Example 15 only in that the upper bed of the isodewaxing reactor was filled with the catalyst (F) provided in the above example instead of the catalyst (B), and the lower bed of the isodewaxing reactor was filled with the catalyst (I) provided in the above example instead of the catalyst (A), otherwise the same as in Example 17.

### Example 19

This Example provides an apparatus for producing a lubricant base oil, which differs from the apparatus of Example 15 only in that the upper bed of the isodewaxing reactor was filled with the catalyst (H) provided in the above example instead of the catalyst (B), and the lower bed of the isodewaxing reactor was filled with the catalyst (J) provided in the above example instead of the catalyst (A), otherwise the same as in Example 17.

### Comparative Example 5

This Example provides an apparatus for producing a lubricant base oil, which differs from the apparatus of Example 15 only in that the upper bed of the isodewaxing reactor was filled with the catalyst(FC1) provided in the above example instead of the catalyst(B), and the lower bed of the isodewaxing reactor was filled with the catalyst (IC1) provided in the above example instead of the catalyst(A), otherwise the same as in Example 17.

### Comparative Example 6

This Example provides an apparatus for producing a lubricant base oil, which differs from the apparatus of Example 15 only in that the upper bed of the isodewaxing reactor was filled with the catalyst(FC2) provided in the above example instead of the catalyst(B), and the lower bed of the isodewaxing reactor was filled with the catalyst (IC2) provided in the above example instead of the catalyst(A), otherwise the same as in Example 17.

### Example 20

This Example provides a process for producing a lubricant base oil, which was carried out using the apparatus for producing a lubricant base oil provided in Examples 15-19, and Comparative Examples 5-6, respectively (the difference between Examples 15-19 and Comparative Examples 5-6 was only in the type of catalyst in the isodewaxing reactor), in the following process.
(1) The VGO(A)having properties shown in Table 3 was premixed with hydrogen to form a hydrogen-oil mixture, which entered the isodewaxing reactor to carry out the isomerization reaction and cracking reaction with the isodewaxing catalyst therein to produce an oil (M), wherein the temperature of the isodewaxing reactor was 380°C.
(2) The oil (M)was mixed with hydrogen, and then was subjected to an aromatic hydrocarbon saturation reaction with a finishing catalyst in a finishing reactor, and the resulting product was fractionated to obtain a lubricant base oil, wherein the temperature of the finishing reactor was 230°C.

For the catalyst of the isodewaxing reactor, the reaction pressure was 12 Mpa, the LHSV (Liquid Hourly Space Velocity) was 0.7 h⁻¹ , and the hydrogen-to-oil volume ratio was 700 (i.e. the volume ratio of hydrogen to VGO).

**Table 3. Properties of VGO(A)**

| Items | Results |
|---|---|
| Density (20°C), g/ml | 0.8651 |
| Initial distillation point (HK), °C | 326 |
| Gas phase temperature at 50% of the distillate, i.e. 50% point, °C | 517 |
| Final distillation point (KK), °C | 579 |
| Sulfur, µg/g | 57 |
| Nitrogen, µg/g | 38 |
| Wax content, ωt% | 79 |
| Aromatic hydrocarbon content, ωt% | 19.8 |
| Freezing point, °C | 69 |
| Pour point, °C | 53 |

In the above process for producing a lubricant base oil, the lubricant base oil was produced using the apparatus for producing a lubricant base oil provided in Examples 15-19 and Comparative Examples 5-6, respectively, and the properties of the obtained lubricant base oils were shown in Table 4.

**Table 4.Properties of product obtained with VGO(A) as a raw material**

| Items | Type of equipment used to produce lubricant base oils | | | | | | |
|---|---|---|---|---|---|---|---|
| | Example 15 | Example 16 | Example 17 | Example 18 | Comparative Example 5 | Comparative Example 6 | Example 19 |
| Sulfur, µg/g | 0.1 | <0.1 | 0.1 | 0.1 | 0.5 | 0.2 | 0.2 |
| Nitrogen, µg/g | < 0.1 | < 0.1 | < 0.1 | < 0.1 | 0.2 | 0.1 | 0.1 |
| Viscosity (100°C), mm²/s | 11.2 | 12.1 | 11.8 | 11.3 | 12.2 | 11.8 | 10.9 |
| Viscosity index | 132 | 122 | 124 | 135 | 108 | 117 | 138 |
| Pour point, °C | -18 | -24 | -24 | -18 | -7 | -10 | -15 |
| Turbidity point, °C | -10 | -15 | -10 | -8 | 3 | -2 | -5 |
| Aromatic hydrocarbon content, ωt% | <0.5 | <0.5 | <0.5 | <0.5 | 1.1 | 0.7 | <0.5 |
| Total base oil yield, ωt% | 87.5 | 89.3 | 86.3 | 85.7 | 89.1 | 87.7 | 87.3 |
| Liquid yield, ωt% | 95.7 | 97.3 | 96.8 | 96.2 | 98.4 | 97.1 | 98.5 |

| | | | | | | | |
|---|---|---|---|---|---|---|---|
| Note: Liquid yield is calculated as follows: Liquid yield = liquid product amount (by weight) ÷ liquid raw material feed amount (by weight) × 100% Base oil yield (based on the components with a distillation temperature of > 320°C as the base oil fraction) is calculated as follows: base oil yield = the content in weight percentage of the components with a distillation temperature of > 320°C × liquid yield | | | | | | | |

### Example 21

This Example provides a process for producing a lubricant base oil, which was carried out using the apparatus for producing a lubricant base oil provided in Examples 15-19, and Comparative Examples 5-6, respectively (the difference between Examples 15-19 and Comparative Examples 5-6 was only in the type of catalyst in the isodewaxing reactor), in the following process.
(1) The VGO(B)having properties shown in Table 5 was premixed with hydrogen to form a hydrogen-oil mixture, which entered the isodewaxing reactor to carry out the isomerization reaction and cracking reaction with the isodewaxing catalyst therein to produce an oil (M), wherein the temperature of the isodewaxing reactor was 340°C.
(2) The oil (M)was mixed with hydrogen, and then was subjected to an aromatic hydrocarbon saturation reaction with a finishing catalyst in a finishing reactor, and the resulting product was fractionated to obtain a lubricant base oil, wherein the temperature of the finishing reactor was 230°C.

For the catalyst of the isodewaxing reactor, the reaction pressure was 15Mpa, the LHSV (Liquid Hourly Space Velocity) was 1.0 h⁻¹ , and the hydrogen-to-oil volume ratio was 400 (i.e. the volume ratio of hydrogen to VGO).

**Table 5. Properties of VGO(B)**

| Items | Results |
|---|---|
| Density (20°C), g/ml | 0.8438 |
| Initial distillation point (HK), °C | 324 |
| Gas phase temperature at 50% of the distillate, i.e. 50% point, °C | 453 |
| Final distillation point (KK), °C | 551 |
| Sulfur, µg/g | 32 |
| Nitrogen, µg/g | 17 |
| Pour point, °C | 47 |
| Wax content, ωt% | 61 |
| Aromatic hydrocarbon content, ωt% | 36.5 |
| Freezing point, °C | 58 |

In the above process for producing a lubricant base oil, the lubricant base oil was produced using the apparatus for producing a lubricant base oil provided in Examples 17-22, respectively, and the properties of the obtained lubricant base oils were shown in Table 6.

**Table 6.Properties of product obtained with VGO(B) as a raw material**

| Items | properties of produced lubricant base oils | | | | | | |
|---|---|---|---|---|---|---|---|
| | Example 15 | Example 16 | Example 17 | Example 18 | Comparative Example 5 | Comparative Example 6 | Example 19 |
| Sulfur, µg/g | <0.1 | <0.1 | 0.1 | 0.1 | 0.3 | 0.2 | 0.1 |
| Nitrogen, µg/g | 0.1 | <0.1 | <0.1 | 0.1 | 0.2 | 0.1 | <0.1 |
| Viscosity (100°C), mm² /s | 8.1 | 9.3 | 9.1 | 8.7 | 9.3 | 8.9 | 8.5 |
| Viscosity index | 134 | 122 | 125 | 129 | 114 | 118 | 131 |
| Pour point, °C | -22 | -25 | -28 | -20 | -8 | -11 | -25 |
| Turbidity point, °C | -12 | -15 | -14 | -10 | 4 | -1 | -8 |
| Aromatic hydrocarbon content, ω% | <0.5 | <0.5 | <0.5 | <0.5 | 0.8 | 0.6 | <0.5 |
| Total base oil yield, ω% | 87.3 | 91.1 | 87.4 | 86.8 | 88.4 | 87.3 | 87.5 |
| Liquid yield, ωt% | 95.9 | 97.1 | 95.4 | 96.8 | 98.5 | 97.2 | 96.1 |

| | | | | | | | |
|---|---|---|---|---|---|---|---|
| Note: Liquid yield is calculated as follows: Liquid yield = liquid product amount (by weight) ÷ liquid raw material feed amount (by weight) × 100% Base oil yield (based on the components with a distillation temperature of > 320°C as the base oil fraction) is calculated as follows: base oil yield = the content in weight percentage of the components with a distillation temperature of > 320°C × liquid yield | | | | | | | |

As can be seen from the above Examples, the technical solution provided by the present invention shows excellent processing capability for producing lubricant base oil from wax-containing oil, especially from wax-containing oil with a high condensation point, and can effectively solve the current problem due to the high turbidity point of the lubricant base oil. The method provided by the present invention for producing a lubricant base oil has the advantages of strong aromatic hydrocarbon saturation ability, excellent hydro-isomerization performance, high base oil yield, and lowered pour point of base oil and lowered turbidity point. The method for producing a lubricant base oil provided by the present invention has outstanding performance in producing a base oil with high viscosity and viscosity index and low turbidity point.

The isodewaxing catalyst provided by the present invention employs a twice modified molecular sieve having ten-membered ring structure as a support to be loaded with precious metal catalyst. By using this catalyst, a wax-containing oil was treated by a method of hydroisomerization to produce a lubricant base oil. The lubricant base oil as produced has excellent performance, especially for treating a wax-containing oil having a high condensation point, and lubricant base oil as produced has the advantages of low turbidity point, low pour point, high viscosity and high viscosity index.

The wax-containing oil having a high condensation point has specific properties such as a distillation range of 300-600°C, a freezing point not higher than 70°C, a wax content not higher than 80wt%, an aromatic hydrocarbon content not higher than 50wt%, a sulfur content not higher than 100µg/g and a nitrogen content not higher than 50µg/g. The wax-containing oil having a high condensation point has a heavy distillation range, a long wax molecular chain length and a high wax content, so it can be hydrogenated and isomerized through the modified molecular sieve to produce a lubricant base oil with high viscosity and high viscosity index.

The process of the present invention can be applied to the production of II / III / III+ grade lubricant base oil by using VGO, VGDO, hydrocracking tail oil, deasphalted oil, coker wax oil and ceratum as raw materials, and especially for the production of high-grade lubricant base oil with low turbidity point, high viscosity and high viscosity index by using a heavy wax-containing oil having a high condensation point as raw material, and thus it has remarkable effect and broad application prospects.

## Claims

1. A process for preparing an isodewaxing catalyst, comprising steps of:
(1) primarily modifying an unformed molecular sieve containing a ten-membered ring structure by using a modifier, and drying and baking it to obtain a primarily modified molecular sieve, wherein the modifier used in the primary modification includes a solution of an alkali metal salt and/or an acid solution;
(2) secondarily modifying the formed primarily modified molecular sieve by using a modifier, and then drying and baking it to obtain a secondarily modified molecular sieve, wherein the modifier used in the secondary modification includes a solution of an alkali metal salt and/or an acid solution; and
(3) loading a precious metal as an active component onto the secondarily modified molecular sieve, and drying and baking it to obtain the isodewaxing catalyst.

2. The process according to claim 1, wherein the unformed molecular sieve containing a ten-membered ring structure comprises one or more of ZSM-5, SAPO-11, EU-1, ITQ-13, ZSM-22, MCM-22, NU-87, ZSM-23, ZSM-35, ZSM-48, and their composite molecular sieves.

3. The process according to claim 1, wherein the unformed molecular sieve containing a ten-membered ring structure has a structure having through pores.

4. The process according to claim 1, wherein
the precious metal as an active component comprises one or more of Pt, Pd, Ru, Rh, Re and Ir;
preferably, the precious metal as an active component comprises Pt and Pd;
more preferably, in the isodewaxing catalyst, Pt and Pd are included in an amount of 0.3 wt% and 0.2 wt%, respectively, based on 100% of the mass of the isodewaxing catalyst.

5. The process according to claim 1 or 4, wherein the precious metal as an active component in the isodewaxing catalyst is included in an amount of 0.1-1 wt% of the total mass of the catalyst;
preferably, the precious metal as an active component is included in an amount of 0.1-0.5 wt% of the total mass of the catalyst.

6. The process according to claim 1, wherein
in step (1), the alkali metal salt comprises a salt of Group IA, IIA, IIIA, IB and/or IIB metal; preferably, the alkali metal salt comprises one or more of a potassium salt, magnesium salt, calcium salt, strontium salt, barium salt, copper salt, zinc salt, gallium salt, and tin salt;
in step (1), the acid comprises one or more of nitric acid, phosphoric acid, acetic acid, tartaric acid, and citric acid;
in step (2), the alkali metal salt comprises a salt of Group IA, IIA, IIIA, IB and/or IIB metal; preferably, the alkali metal salt comprises one or more of a potassium salt, magnesium salt, calcium salt, strontium salt, barium salt, copper salt, zinc salt, gallium salt, and tin salt; and
in step (2), the acid comprises one or more of nitric acid, phosphoric acid, acetic acid, tartaric acid, and citric acid.

7. The process according to claim 1, wherein
in step (1), the baking is carried out at a temperature of 300-600°C for a period of 4-10 hours;
in step (2), the baking is carried out at a temperature of 300-600°C for a period of 5-20 hours; and
in step (3), the baking is preferably carried out at a temperature of 300-600°C for a period of 4-20 hours.

8. The process according to claim 1, wherein the primarily modified molecular sieve has a B acid content of 0.2-0.6 mmol/g and a content ratio of B acid to L acid of 6:1-1:1 when it is tested at 150°C; and a B acid content of 0.05-0.4 mmol/g and a content ratio of B acid to L acid of 6:1-1:1when it is tested at 350°C;
wherein the sum of B acid and L acid content at 150°C is larger than the sum of B acid and L acid content at 350°C.

9. The process according to claim 1, wherein in step (1), the concentration of the alkali metal salt in the solution of an alkali metal salt is 0.1-0.5 mol/L and the concentration of the acid in the acid solution is 0.1-0.5 mol/L; preferably, the ratio of the mass of the unformed molecular sieve containing a ten-membered ring structure to the volume of the modifier used in the primary modification is 100 g: 50-70 mL; and
in step (2), the concentration of the alkali metal salt in the solution of an alkali metal salt is 0.1-0.5 mol/L and the concentration of the acid in the acid solution is 0.1-0.5 mol/L; preferably, the ratio of the mass of the primarily modified molecular sieve to the volume of the modifier used in the secondary modification is 1 g:2mL.

10. An isodewaxing catalyst obtained by the process for preparing an isodewaxing catalyst according to any one of claims 1-9.

11. A process for producing a lubricant base oil, comprising steps of:
(A)premixing a wax-containing oil with hydrogen to form a hydrogen-oil mixture, and reacting the hydrogen-oil mixture with at least two of the isodewaxing catalysts according to claim 10 in sequence to produce an oil (M); and
(B)mixing the oil (M) with hydrogen and then subjecting it to an aromatic hydrocarbon saturation reaction with a finishing catalyst to produce a product, which is fractionated to obtain the lubricant base oil;
wherein the wax-containing oil has a freezing point not higher than 70°C, a wax content not higher than 80wt%, an aromatic hydrocarbon content not higher than 50wt%, a sulfur content not higher than 100µg/g, a nitrogen content not higher than 50µg/g, and a distillation range of 300-600°C.

12. The process according to claim 11, wherein the wax-containing oil is a high freezing point wax-containing oil having a freezing point not higher than 60°C.

13. The process according to claim 11, wherein the active component in the finishing catalyst is a precious metal catalyst;
preferably, the active component in the finishing catalyst contains one or more of Pt, Pd, Ru, Rh, Re and Ir;
preferably, the active component accounts for 0.1-1.0 wt% of the total mass of the finishing catalyst;
preferably, the finishing catalyst has a support including one or more of alumina, amorphous silica-alumina, titanium dioxide, zirconium dioxide and silicon dioxide.

14. The process according to claim 11, wherein the wax-containing oil is one or more selected from VGO, VGDO, hydrocracking tail oil, deasphalted oil, and coker wax oil.

15. The process according to claim 11, wherein
the isomerization reaction in step (A) is carried out at a temperature of 300-400°C and a pressure of 8-16 MPa;
the aromatic hydrocarbon saturation reaction in step (B) is carried out at a temperature of 150-300°C and a pressure of 8-16 MPa.

16. The process according to claim 11, wherein the wax-containing oil has a freezing point not higher than 60°C, a wax content not higher than 70wt%, an aromatic hydrocarbon content not higher than 50wt%, a sulfur content not higher than 100µg/g, a nitrogen content not higher than 50µg/g, an initial distillation point not lower than 300°C and a final distillation point not higher than 600°C.

17. The process according to claim 11, wherein
the wax-containing oil has a freezing point not higher than 50°C, a wax content not higher than 60wt%, an aromatic hydrocarbon content not higher than 40wt%, a sulfur content not higher than 50µg/g, a nitrogen content not higher than 20µg/g, an initial distillation point not lower than 320°C and a final distillation point not higher than 580°C.

18. A lubricant base oil obtained by the process according to any one of claims 11-17, wherein the lubricant base oil has a turbidity point not higher than -15°C, preferably, the lubricant base oil has a turbidity point not higher than -10°C, and more preferably, the lubricant base oil has a turbidity point not higher than -5°C.

19. An apparatus for producing a lubricant base oil, comprising an isodewaxing reactor, a finishing reactor, and a fractionation system, wherein
the isodewaxing reactor is connected to the finishing reactor, which is connected to the fractionation system,
the isodewaxing reactor comprises at least two beds, and is charged with at least two isodewaxing catalysts; the isodewaxing reactor is used to perform isomerization and cracking reactions of a wax-containing oil, mixed with hydrogen, with the isodewaxing catalysts therein; and the at least two isodewaxing catalysts are selected from the isodewaxing catalysts according to claim 10;
the finishing reactor is used to perform an aromatic hydrocarbon saturation reaction of the reaction products in the isodewaxing reactor, mixed with hydrogen; and
the fractionation system is used to perform fractionation of the product obtained in the finishing reactor to obtain a lubricant base oil.
